(19) **Europäisches Patentamt**
**European Patent Office**
**Office européen des brevets**

(11) **EP 4 668 236 A1**

(12) **EUROPEAN PATENT APPLICATION**

(43) Date of publication:
**24.12.2025 Bulletin 2025/52**

(21) Application number: **25174213.6**

(22) Date of filing: **05.05.2025**

(51) International Patent Classification (IPC):
**G06V 20/80** (2022.01)  **G06V 20/52** (2022.01)

(52) Cooperative Patent Classification (CPC):
**G06V 20/80; G06V 20/52**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **21.06.2024 US 202418750388**

(71) Applicant: **Intel Corporation**
**Santa Clara, CA 95054 (US)**

(72) Inventors:
• **MUDGAL, Priyanka**
**Portland, 97229 (US)**

• **WOUHAYBI, Rita Hanna**
**Portland, 97229 (US)**
• **MCMILLAN, Caleb Mark**
**Forest Grove, 97116 (US)**
• **CONNOR, Patrick L.**
**Beaverton, 97007 (US)**
• **RAJORE, Ritesh Kumar**
**560048 Bangalore (IN)**
• **WILLIAMS, Jennifer Marie**
**Hillsboro, 97124 (US)**

(74) Representative: **Maiwald GmbH**
**Elisenhof**
**Elisenstraße 3**
**80335 München (DE)**

(54) **MEASURING OBJECT PECULIARITY IN DISTRIBUTED ENVIRONMENTS**

(57)    Example apparatus disclosed herein are to generate first descriptive data of a first physical characteristic of a first object based on first camera sensor data from a first camera sensor, and generate second descriptive data of a second physical characteristic of a second object based on second camera sensor data from a second camera sensor different from the first camera sensor. Disclosed example apparatus are also identify, based on the first descriptive data and the second descriptive data, common physical characteristics associated with both the first object and the second object, first unique physical characteristics associated with the first object, and second unique physical characteristics associated with the second object. Disclosed example apparatus are further to identify the first object and the second object as one of a same object or different objects based on the common physical characteristics, the first unique physical characteristics, and the second unique physical characteristics.

FIG. 1

**Description**

BACKGROUND

Many object identification and tracking techniques rely on attaching identifiers and/or imprinting identification information on the objects to be identified and/or tracked. Some techniques utilize a barcode and/or a quick response (QR) code printed on a label to be attached to an object and/or printed on the object itself. Other techniques utilize a radio frequency identification (RFID) tag to be attached to an object, embedded in the object, etc. Such techniques rely on manual and/or automatic scanning of barcodes, QR codes, RFID tags, etc., to identify and/or track objects in an environment, such as a warehouse, a commercial building, etc.

BRIEF DESCRIPTION OF THE DRAWINGS

FIG. 1 is a block diagram of an example environment including example uniqueness measurement circuitry to measure object peculiarity in accordance with teachings of this disclosure.
FIG. 2 is a diagram illustrating example operation of the uniqueness measurement circuitry of FIG. 1 to identify an object based on physical characteristics determined from camera sensor data.
FIG. 3 is a flowchart representative of example machine readable instructions and/or example operations that may be executed, instantiated, and/or performed by example programmable circuitry to implement the uniqueness measurement circuitry of FIG. 1.
FIG. 4 is a block diagram of an example processing platform including programmable circuitry structured to execute, instantiate, and/or perform the example machine readable instructions and/or perform the example operations of FIG. 3 to implement the uniqueness measurement circuitry of FIG. 1.
FIG. 5 is a block diagram of an example implementation of the programmable circuitry of FIG. 4.
FIG. 6 is a block diagram of another example implementation of the programmable circuitry of FIG. 4.
FIG. 7 is a block diagram of an example software/firmware/instructions distribution platform (e.g., one or more servers) to distribute software, instructions, and/or firmware (e.g., corresponding to the example machine readable instructions of FIG. 3) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale.

DETAILED DESCRIPTION

Object identification and/or tracking techniques typically rely on identifiers attached to the objects and/or identification information imprinted on the objects to be identified and/or tracked. For example, some object identification and/or tracking techniques employed in warehouses, commercial buildings (e.g., retail stores, shipping facilities, etc.) rely on barcodes and/or QR codes printed on labels to be attached to the objects and/or printed on the objects themselves, RFID tag attached to or embedded in the objects, etc. Such techniques may then employ manual and/or automatic scanning of the barcodes, the QR codes, the RFID tags, etc., to identify and/or track the objects as they arrive, leave and/or are moved in a given environment.

However, there are potential drawbacks associated with such object identification and/or tracking techniques that rely on barcodes, QR codes, RFID tags, etc. For example, such techniques may be unable to identify and/or track an object if its barcode, QR code, RFID tag, etc., becomes detached from the object, is damaged or obscured, etc. Also, such techniques may incur financial and personnel costs to create, assign, replace, scan, etc., the barcodes, QR codes, RFID tags, etc.

In contrast, example object peculiarity, or uniqueness, measurement techniques disclosed herein identify objects based on camera sensor data that captures the physical characteristics of the objects. For example, as trucks arrive at a warehouse and are being unloaded, multiple pallets that are seamlessly identical can be part of the same shipment. Creating unique identifiers, such as barcodes, QR codes, RFID tags, etc., for these pallets is not a trivial task and can involve substantial investment in hardware, software, and personnel. However, the pallets are not completely identical and, more generally, no two physical objects are completely identical.

With this in mind, example object uniqueness measurement techniques disclosed herein utilize distributed cameras to measure and quantify the uniqueness of physical objects. Disclosed example object uniqueness measurement techniques further create (e.g., automatically, without human intervention) object identifiers based on the physical properties of the objects. For example, a first pallet unloaded from a truck might have a small black smudge that was caused by the truck's rolling door when the truck was closed. A second pallet unloaded from the truck might have one of the boxes offset at an angle relative to the boxes of that pallet. Disclosed example object uniqueness measurement techniques process camera sensor data from the distributed cameras to determine physical properties of objects depicted in the camera sensor data, such as the physical properties of the pallets in the preceding example. Determining such properties and whether they are unique or similar across different objects depicted in the image data makes it possible for disclosed example object uniqueness measurement techniques to identify the different objects depicted in the camera data as corresponding to a same physical object or different physical objects.

Furthermore, disclosed example object uniqueness measurement techniques can create an identity for a given object based on its determined physical characteristics. Also, the object's identity can be dynamic because the physical characteristics of the object can change throughout its lifespan, and disclosed example object uniqueness measurement techniques can track such changes. For example, disclosed example object uniqueness measurement techniques can determine identities for the pallets and boxes in the preceding example based on camera sensor data obtained from camera positioned at various locations in the warehouse and/or have various different fields of view. Such identities can be used to identify the pallets, boxes, and/or products they are holding, enable inventory and/or provenance tracking of these objects, and support autonomous warehouse management. Moreover, disclosed example object uniqueness measurement techniques may map object identities determined based on the physical characteristics of the objects to other identification information (e.g., barcodes, QR codes, RFID tags, etc.) assigned to the objects. Such mapping enables the assigned identification information to be regenerated in case of damage (e.g., such as in the case of damage to shipping labels during transport). These and other benefits of object uniqueness measurement, as disclosed herein, are described in further detail below.

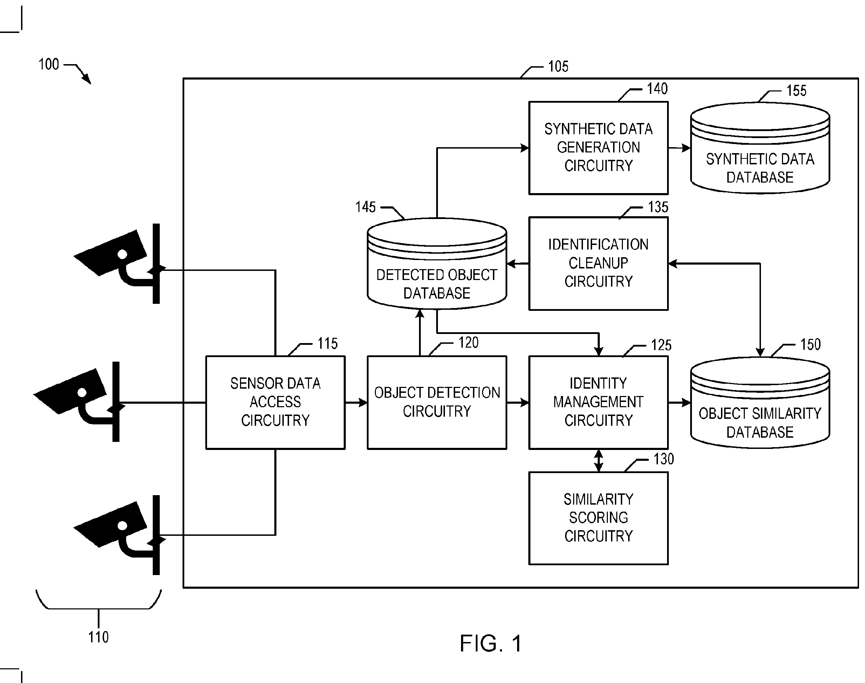

FIG. 1 is a block diagram of an example environment 100 including example uniqueness measurement circuitry 105 to measure object peculiarity in accordance with teachings of this disclosure. The uniqueness measurement circuitry 105 of FIG. 1 may be instantiated (e.g., creating an instance of, bring into being for any length of time, materialize, implement, etc.) by programmable circuitry such as a Central Processor Unit (CPU) executing first instructions. Additionally or alternatively, the uniqueness measurement circuitry 105 of FIG. 1 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 1 may, thus, be instantiated at the same or different times. Some or all of the circuitry of FIG. 1 may be instantiated, for example, in one or more threads executing concurrently on hardware and/or in series on hardware. Moreover, in some examples, some or all of the circuitry of FIG. 1 may be implemented by microprocessor circuitry executing instructions and/or FPGA circuitry performing operations to implement one or more virtual machines and/or containers.

The example environment 100 of FIG. 1 corresponds to a distributed environment setting, such as a warehouse, a commercial building (e.g., a retail stores, a shipping facility, etc.) in which multiple example camera sensors 110 are deployed. The camera sensors 110 can have different locations in the environment 100, different fields of view in the environment 100, etc. As such, the camera sensors 110 can potentially capture different views of the same object at one or more locations in the environment 100 at the same time and/or different times. In the illustrated example environment 100, the sensor feeds from the camera sensors 110 are provided to the uniqueness measurement circuitry 105 to perform object uniqueness measurement (also referred to as object peculiarity measurement) for the environment 100.

The uniqueness measurement circuitry 105 includes example sensor data access circuitry 115, example object detection circuitry 120, example identity management circuitry 125, example similarity scoring circuitry 130, example identification cleanup circuitry 135, example synthetic data generation circuitry 140, example detected object storage 145, example object similarity storage 150 and example synthetic data storage 155. In the illustrated example, the sensor data access circuitry 115 receives, obtains or otherwise accesses respective camera sensor data from the corresponding camera sensors 110. For example, the camera sensor data from a given camera sensor 110 can include image data (e.g., such as one or more still images) and/or video data (e.g., such as one or more video clips, continuous video, etc.).

In the illustrated example, the object detection circuitry 120 implements one or more AI models, also referred to herein as an AI library or AI pipeline, to process the respective camera sensor data from the corresponding camera sensors 110. The AI pipeline implemented by the object detection circuitry 120 performs one or functions, such as object detection, object segmentation, object identification, object tracking, defect detection, defect classification, physical characteristic identification, barcode detection, QR code detection, etc. The object detection circuitry 120 outputs metadata including descriptive data generated by the AI pipeline that describes one or more physical characteristics of one or more objects detected by the AI pipeline in the camera sensor data. In some examples, the descriptive data is data, such as natural language data, inference data, class data, probability data, label data, etc., that is not pixel-based data. For example, the descriptive data may be different from (e.g., not include) pixel-based data that describes characteristics of individual pixels (e.g., a particular pixel's color, location, intensity, etc.) included in the camera sensor data. In the illustrated example, the object detection circuitry 120 outputs its metadata, which includes the descriptive data of the physical characteristic(s) of the detected object(s), for storage in the detected object storage 145.

The detected object storage 145 can be implemented by any type(s) and/or number(s) of memories, storage devices, etc. In some examples, the detected object storage 145 is configured to store the metadata generated by the object detection circuitry 120, which includes the descriptive data of the physical characteristic(s) of the detected object(s), in a centralized or distributed database. For example, assume the camera sensor data from a first one of the camera sensors 110 includes a video stream with a video frame that depicts two (2) different pallets. In this example, the AI pipeline implemented by the object detection circuitry 120 segments the pallets depicted in the video frame and generates respective metadata for the two pallets that includes an image identifier (ID) of the image, a camera ID that identifies the camera sensor 110 that is the source of the video frame, a temporary object ID assigned to the detected object (e.g., a pallet in this example), and descriptive data of their respective physical characteristics. In some examples, the metadata for a given detected object (e.g., one of the detected pallets in the preceding example) is stored as a record or other data structure in the detected object storage 145 using the following format: (image ID, camera ID, object ID, descriptive data of the object's physical characteristics such as dimensions, color, shape, unique features, etc.).

In some examples, the AI pipeline implemented by the object detection circuitry 120 includes one or more AI models trained to identify a particular collection (e.g., a reference set) of objects and physical characteristics of such objects in input camera sensor data (e.g., input images, videos, etc.). In some such examples, the descriptive data generated for an object may be information, such as flags, probabilities, etc., that indicate which of the trained physical characteristics were identified for a detected object. However, in some examples, the AI pipeline implemented by the object detection circuitry 120 includes one or more generative AI models trained to operate on input camera sensor data (e.g., input images, videos, etc.) to generate descriptive data that describes objects and physical characteristics of such objects in a natural language format. As such, in some examples, the descriptive data generated by the object detection circuitry 120 and stored in the detected object storage 145 is in a natural language format, as described in further detail below.

In the illustrated example, the identity management circuitry 125 compares the descriptive data associated with two objects detected by the object detection circuitry 120 in the camera sensor data from the camera sensors 110. In some examples, the identity management circuitry 125 fetches the respective metadata associated with the two detected objects from the detected object storage 145. As described above, the metadata for a given detected object includes descriptive data that provides a description of the physical characteristics identified for the object. For example, the descriptive data can describe physical characteristics such as an object's defects, specific markings, color, shape, dimensions, orientation, etc. Also, in some examples, the descriptive data is in a natural language format. For example, the descriptive data generated by the object detection circuitry 120 for a pallet detected in camera sensor data may be:

"A pallet contains 2 brown boxes stacked on top of each other. The bottom box has damage in its bottom left corner. The bottom box contains a spot of blue ink on its front face. The spot covers approximately 10% of the bottom box. The top box does not show any sign of damage."

Although the object detection circuitry 120 detects objects in the camera sensor data and generates metadata including descriptive data of the physical characteristics of the detected objects, the object detection circuitry 120 does not know if two detected objects (which may be detected in the same or different camera sensor data feeds) correspond to a same physical object or different physical objects. In the illustrated example, the identity management circuitry 125 processes the fetched descriptive data of two detected objects to identify whether the two detected objects correspond to the same physical object or to different physical objects. In some examples, the identity management circuitry 125 processes the fetched descriptive data of the two detected objects with one or more AI models to identify whether the two detected objects correspond to the same physical object or to different physical objects. In some examples, the identity management circuitry 125 processes the fetched descriptive data of the two detected objects with one or more comparison algorithms, such as a text comparison algorithm, a database record comparison algorithm, etc., to find a set of common physical characteristics shared by both detected objects, a first set of unique physical characteristics associated with a first one of the detected objects, and a second set of unique physical characteristics associated with a second one of the detected objects.

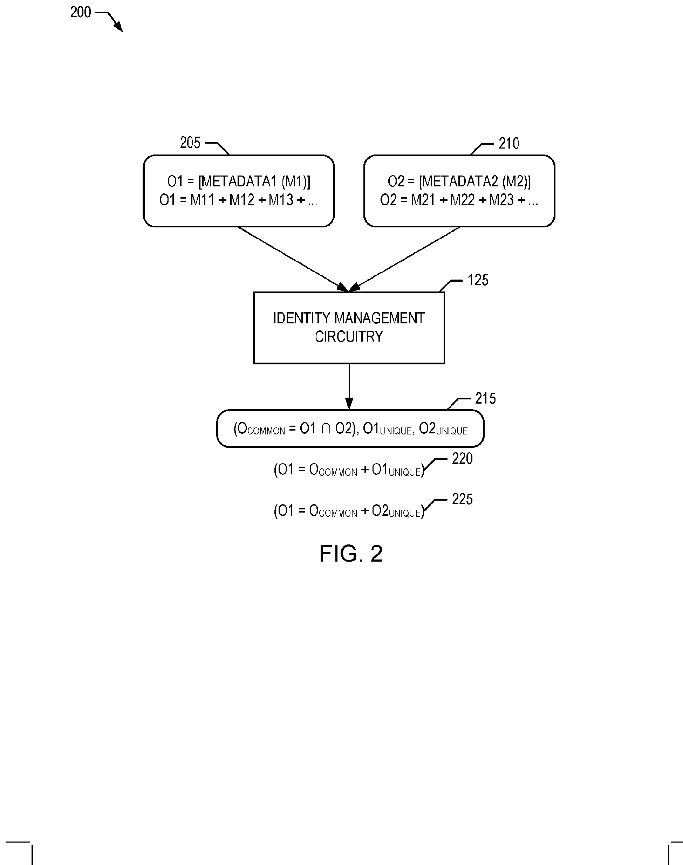

FIG. 2 is a diagram illustrating example operation 200 of the identity management circuitry 125 to identify an object based on physical characteristics determined from camera sensor data. In the illustrated example, the identity management circuitry 125 fetches first example descriptive data 205 (corresponding to M1 in FIG. 2) associated with a first detected object (corresponding to O1 in FIG. 2) and second example descriptive data 210 (corresponding to M2 in FIG. 2) associated with a first detected object (corresponding to O2 in FIG. 2). For example, the identity management circuitry 125 fetches the first descriptive data 205 and the second descriptive data 210 from the detected object storage 145. The first detected object (O1) and the second detected object (O2) may have been detected by the object detection circuitry 120 in the same or different camera sensor data (e.g., same or different images, videos, etc.) from the same or different camera sensors 110. In the illustrated example, the object detection circuitry 120 associated the first detected object with the temporary object ID "O1" and associated the second detected object with the temporary object ID "O2."

In the illustrated example, the first descriptive data 205 includes a first set of physical characteristics (corresponding to M11, M12, M13, etc., in FIG. 2) identified by the object detection circuitry 120 for the first detected object (O1). In the illustrated example, the second descriptive data 210 includes a second set of physical characteristics (corresponding to M21, M22, M23, etc., in FIG. 2) identified by the object detection circuitry 120 for the second detected object (O3). As described above, the first set of physical characteristics (M11, M12, M13, etc.) and the second set of physical characteristics (M21, M22, M23, etc.) may include object defects, specific markings, color, shape, dimensions, orientation, etc., identified in camera sensor data by the object detection circuitry 120 for the first detected object (O1) and the second detected object (O2), respectively.

In the illustrated example, the identity management circuitry 125 processes the first descriptive data 205 and the second descriptive data 210 with one or more models, algorithms, etc., to find example categorized physical characteristics 215 associated with the first detected object (O1) and the second detected object (O2). The example categorized physical characteristics 215 includes a set of common physical characteristics (corresponding to $O_{Common}$ in FIG. 2) identified in both the first descriptive data 205 and the second descriptive data 210 and, thus, shared by both the first detected object (O1) and the second detected object (O2). As such, the set of common physical characteristics ($O_{Common}$) represents the intersection of the physical characteristics identified for the first detected object (O1) and the physical characteristics identified for the second detected object (O2) (represented as $O_{Common}$ = O1 ∩ O2 in FIG. 2.) The categorized physical characteristics 215 also includes a first set of unique physical characteristics (corresponding to $O1_{Unique}$ in FIG. 2) identified in the first descriptive data 205 but not the second descriptive data 210 and. thus, unique to the first detected object (O1). The categorized physical characteristics 215 further includes a second set of unique physical characteristics (corresponding to $O2_{Unique}$ in FIG. 2) identified in the second descriptive data 210 but not the second descriptive data 205 and. thus, unique to the second detected object (O2). As shown in FIG. 2, the identified physical characteristics for the first detected object (O1) correspond to the combination of the common physical characteristics ($O_{Common}$) and the first unique physical characteristics ($O1_{Unique}$) (see reference numeral 220 in FIG. 2). Similarly, the identified physical characteristics for the second detected object (O2) correspond to the combination of the common physical characteristics ($O_{Common}$) and the second unique physical characteristics ($O2_{Unique}$) (see reference numeral 225 in FIG. 2).

Using the first descriptive data 205 (M1) and the second descriptive data 210 (M2) fetched from the detected object storage 145, the identity management circuitry 125 of the illustrated example identifies whether the first detected object (O1) and the second detected object (O2) correspond to a same physical object or different physical objects. In some examples, the identity management circuitry 125 implements one or more AI models trained to identify, based the first descriptive data 205 (M1) and the second descriptive data 210 (M2), whether the first detected object (O1) and the second detected object (O2) correspond to the same physical object or different physical objects. In some examples, the identity management circuitry 125 additionally or alternatively implements one or more AI models trained to identify, based the categorized physical characteristics 215 ($O_{Common}$, $O1_{Unique}$, $O2_{Unique}$), whether the first detected object (O1) and the second detected object (O2) correspond to the same physical object or different physical objects. In some examples, the identity management circuitry 125 additionally or alternatively implements one or more scoring algorithms to identify, based the categorized physical characteristics 215 ($O_{Common}$, $O1_{Unique}$, $O2_{Unique}$), whether the first detected object (O1) and the second detected object (O2) correspond to the same physical object or different physical objects.

For example, returning to FIG. 1, the identity management circuitry 125 may invoke the similarity scoring circuitry 130 to determine a score that represents the similarity between two detected objects (e.g., O1 and O2) based on their respective descriptive data 205 and 210. In some examples, the similarity scoring circuitry 130 implements a cosine similarity algorithm, a Euclidian distance algorithm, an AI model, etc., or any combination thereof, to compute an object similarity score based on the categorized physical characteristics 215 ($O_{Common}$, $O1_{Unique}$, $O2_{Unique}$). In some examples, the similarity score computed by the similarity scoring circuitry 130 is a value such that, if the set of common physical characteristics ($O_{Common}$) forms the majority of the portion of the descriptive data for both objects O1 and O2, then the similarity score indicates the two objects likely correspond to the same physical object. For example, they similarity score computed by the similarity scoring circuitry 130 can be a percentage based on a ratio of an amount of the common physical characteristics ($O_{Common}$) to a total amount of the common physical characteristics, the first unique physical characteristics, and the second unique physical characteristics ($O_{Common}$ + $O1_{Unique}$ + $O2_{Unique}$). Mathematically, the similarity score can be computed by the similarity scoring circuitry 130 according to Equation 1, which is:

$$Similarity\ Score = \frac{O_{Common}}{(O_{Common} + O1_{Unique} + O2_{Unique})} \times 100\%$$

Equation 1

In the illustrated example, if the similarity score computed by the similarity scoring circuitry 130 for the two detected objects (e.g., O1 and O2) satisfies (e.g., meets or exceeds) a threshold (e.g., which may be preconfigured, dynamic, etc.), the identity management circuitry 125 identifies the two detected objects (e.g., O1 and O2, which may have been detected in the same or different camera sensor data) as corresponding to a same physical object (e.g., P1). In some such examples, if neither of the detected objects (e.g., O1 and O2) is already associated with a physical object, the identity management circuitry 125 generates a physical object identifier for the physical object (P1) corresponding to the detected objects (O1 and O2). For example, the identity management circuitry 125 may determine the physical object identifier based on the common physical characteristics ($O_{Common}$) shared by the two objects (e.g., such as a hash of the common physical characteristics), or may set the physical object identifier to be the temporary object identifier corresponding to one of the two detected objects. However, if one of the detected objects (e.g., O1 or O2) is already associated with a physical object identifier of a physical object, the identity management circuitry 125 associates the other one of the detected objects with that same physical object identifier.

In the illustrated example, if the similarity score computed by the similarity scoring circuitry 130 for the two detected objects (e.g., O1 and O2) does not satisfy (e.g., is less than) the threshold, the identity management circuitry 125 identifies the two detected objects (e.g., O1 and O2) as corresponding to different physical objects (e.g., P1 and P2, respectively). In some such examples, the identity management circuitry 125 generates a first physical object identifier for the first physical object (P1) corresponding to the first detected object (O1) and generates a second physical object identifier for the second physical object (P2) corresponding to the second detected object (O2). For example, the identity management circuitry 125 may determine the first physical object identifier based on the unique physical characteristics ($O1_{Unique}$) of the first detected object (O1) (e.g., such as a hash of the unique physical characteristics), or may set the first physical object identifier to be the temporary object identifier corresponding to first detected object (O1). Likewise, the identity management circuitry 125 may determine the second physical object identifier based on the unique physical characteristics ($O2_{Unique}$) of the second detected object (O2) (e.g., such as a hash of the unique physical characteristics), or may set the second physical object identifier to be the temporary object identifier corresponding to second detected object (O2). In this way, the identity management circuitry 125 and the similarity scoring circuitry 130 automatically identify unique objects in camera sensor data (e.g., multiple images, multiple video streams, etc.) from the camera sensors 110.

In the illustrated example, the identity management circuitry 125 stores the similarity score determined for the detected objects (e.g., O1 and O2), as well as the physical object identifier(s) for the physical object(s) identifies as corresponding to the two detected objects, in the object similarity storage 150. The object similarity storage 150 can be implemented by any type(s) and/or number(s) of memories, storage devices, etc. In some examples, each object entry in the object similarity storage 150 is also tied to an image and/or video containing the object (e.g., an image and/or video in which the object detection circuitry 120 detected the object). However, if an image/video contains the same objects that contained in other images/videos stored in the object similarity storage 150, it might be unnecessary to save multiple images/videos that depict the same, or substantially the same, objects. Thus, in the illustrated example of FIG. 1, the identification cleanup circuitry 135 maintains, for a given physical object identified from the detected objects in the processed camera sensor data, a single image/video or a few images/videos (e.g., associated with different orientations, perspectives, etc.) and marks other image/video instances for deletion from the object similarity storage 150 to achieve storage savings. In some examples, the identification cleanup circuitry 135 directly deletes the marked image/video instances from the object similarity storage 150. In some examples, if there are multiple images/videos (e.g., associated with different orientations, perspectives, etc.) associated with a given physical object, the identification cleanup circuitry 135 selects the image/video having the largest set common physical characteristics ($O_{Common}$) to be a thumbnail image/video representing the physical object.

In the illustrated example, uniqueness measurement circuitry 105 includes the synthetic data generation circuitry 140 to generate synthetic data from the objects and metadata (e.g., descriptive data of physical characteristics of the objects) generated by the object detection circuitry 120 from the camera sensor data obtained by the sensor data access circuitry 115 from the camera sensors 110. In the illustrated example, the synthetic data generation circuitry 140 stores the synthetic data in the synthetic data storage 155, which may be implemented by any type(s) and/or number(s) of memories, storage devices, etc. For example, the synthetic data generation circuitry 140 may create synthetic object data based on different combinations of the physical characteristics identified from different detected objects. In some examples, the synthetic data generation circuitry 140 uses the synthetic data generation circuitry 140 to further train, or retrain, one or AI models implemented by the uniqueness measurement circuitry 105, one or more AI models that operate downstream of the uniqueness measurement circuitry 105, etc.

To further demonstrate the capabilities of the uniqueness measurement circuitry 105, consider the following example. Assume the first camera sensor data from a first one of the camera sensors 110, such as a first frame of video, is fed by the sensor data access circuitry 115 to the object detection circuitry 120. The object detection circuitry 120 processes the first frame with its AI pipeline and detects two (2) objects in the frame. Assume that the object detection circuitry 120 outputs the following metadata for the first detected object in the frame:

"Object ID: 1, Image ID: 1, Descriptive data: A pallet contains 2 boxes stacked on top of each other. A bar code is on the front face of the bottom box. The bottom box contains a blue ink mark on its top left corner. The top box contains a bar code on its left face. The top right corner of top box is broken."

Assume that the object detection circuitry 120 outputs the following metadata for the second detected object in the frame:

"Object ID: 2, Image ID: 1, Descriptive data: A pallet contains 3 boxes stacked on top of each other. All 3 boxes bar codes have bar codes on their front faces. The bottom box exhibits moisture damage. The middle box appears undamaged. The top box contains a black mark near is top edge."

In this example, there are two unique objects captured in this image. Next, assume that Object ID 1 takes a different route through the warehouse than Object ID 2. For example, assume Object ID 1 takes the next left in the warehouse and a different camera sensor 110 captures it in its camera sensor data, such as a second frame of video. This second frame is fed by the sensor data access circuitry 115 to the object detection circuitry 120. The object detection circuitry 120 processes the second frame with its AI pipeline and an object in the second frame. Assume that the object detection circuitry 120 outputs the following metadata for the first detected object in the frame:

"Object ID: 178, Image ID: 2, Descriptive data: A pallet contains 2 boxes stacked on top of each other. The bottom box contains a bar code on its front face. The bottom box has a blue ink mark on its top left corner. The top box contains a bar code on its left face. The top right corner of top box is broken."

At this point, the object detection circuitry 120 does not know if the Object ID 178 corresponds to another object that has been detected before, or is a unique object detected for the first time. The Object IDs assigned by the object detection circuitry 120 are temporary identifiers that enable the object detection circuitry 120 to distinguish different objects detected in different camera sensor data (e.g., the first frame vs. the second frame in the preceding example) but do not distinguish whether the detected objects correspond to the same or different physical objects.

Next, the identity management circuitry 125 fetches two (2) object entries from the detected object storage 145 and identifies whether the two detected objects correspond to a same object or different objects based on their respective descriptive data, which describes the identified physical properties of the two detected objects. For example, the identity management circuitry 125 uses the descriptive data for the two objects to identify a set of common physical characteristics ($O_{Common}$) shared by the objects, a first set of unique physical characteristics ($O1_{Unique}$) associated with the first object, a second set of unique physical characteristics ($O2_{Unique}$) associated with the second object. In the above example, if the identity management circuitry 125 fetches the entries for Object ID 1 and Object ID 2, the set of common physical characteristics ($O_{Common}$) identified by the identity management circuitry 125 will be small because the two objects have few similarities. Thus, the identity management circuitry 125 will identify Object ID 1 and Object ID 2 as corresponding to two different (unique) physical objects. However, if the identity management circuitry 125 fetches the entries for Object ID 1 and Object ID 178, the set of common physical characteristics ($O_{Common}$) identified by the identity management circuitry 125 will be large. Thus, the identity management circuitry 125 will identify Object ID 1 and Object ID 178 as corresponding to the same physical object.

In some examples, the identity management circuitry 125 also performs object provenance tracking to analyze potential causes of object damage by clustering identified objects based on physical characteristics and identifying the locations, times, etc., at which the objects were detected (e.g., based on the locations of the camera sensors 110 and the times associated with the sensory data from the camera sensors 110). For example, the physical characteristics may be characteristics associated with damage and specified by one or more input keywords. In some examples, the identity management circuitry 125 uses such clustering to predict the likelihood that a particular location, route, sequence of processes, etc., is a cause of object damage. Such information can be used to improve efficiency of an autonomous warehouse.

In some examples, the synthetic data generation circuitry 140 generates synthetic data to aid in the analysis of potential causes of object damage. The information generated by the object detection circuitry 120 and the identity management circuitry 125 enables the tracking of events and physical characteristics of object (e.g., pallets, boxes, etc.) as the objects traverse a warehouse and, thus, can show physical characteristics before and after damage occurs. For example, water damage can be detected as boxes move into an area of the warehouse with a leak, and the physical characteristics of the box before and after the damage can be identified. The synthetic data generation circuitry 140 can use this information at scale to generate synthetic data that, for example, adds water damage in random areas on a pallet, which can be used to train an AI model to detect such water damage.

Furthermore, in some examples, the identity management circuitry 125 tracks identified objects as they move through an environment, such as warehouse, a distribution center, etc., to identify particular locations, routes, sequences of processes, associated with slow object movement vs. fast object movement. Such tracking can be used to improve operations to increase throughput, volume, etc., associated with object handling in the warehouse, the distribution center, etc.

In some examples, the identity management circuitry 125 operates to create an identifier for an object, such as a barcode, a QR codes, an RFID tag, etc., based on an object identity determined by the identity management circuitry 125 based the object's physical characteristics. For example, the uniqueness measurement circuitry 105 can be used in parallel with existing object identification techniques based on barcodes, QR codes, RFID tags, etc., to detect that a bar code, QR code, RFID tag, etc., of a particular object is missing or damaged (e.g., has been torn off, subjected to moisture damage, etc.). In some such examples, the identity management circuitry 125 identifies the similarity of detected objects based on their physical characteristics, as described above, and reassigns the objects their identities by generating new or replacement barcodes, QR codes, RFID tags, etc., which may involve mapping the new/replacement barcodes, QR codes, RFID tags, etc., to their corresponding previous versions.

In view of the foregoing description, it will be appreciated that, in some examples, the uniqueness measurement circuitry 105 includes the object detection circuitry 120 to generate first descriptive data of a first physical characteristic of a first object based on first camera sensor data from a first one of the camera sensors 110, and to generate second descriptive data of a second physical characteristic of a second object based on second camera sensor data from a second one of the camera sensors 110 different from the first one or the camera sensor. For example, the first one of the camera sensors 110 may be associated with a first location, a first field of view, etc., and the second one of the camera sensors 110 may be associated with a second location different from the first location, a second field of view different from the first field of view, etc. In some examples, the uniqueness measurement circuitry 105 includes the identity management circuitry 125 to identify the first object and the second object as one of a same object or different objects based on the first descriptive data and the second descriptive data.

In some examples, the object detection circuitry 120 generates the first descriptive data and/or the second descriptive data based on at least one of time information or location information associated with the first camera sensor data and the second camera sensor data. In some examples, the first camera sensor data includes at least one of a first image or a first video, and the second camera sensor data includes at least one of a second image or a second video.

In some examples, the object detection circuitry 120 inputs the first camera sensor data to an AI model to generate the first descriptive data. In some examples, the object detection circuitry 120 inputs the second camera sensor data to the AI model to generate the second descriptive data. In some examples, at least one of the first descriptive data or the second descriptive data is in a natural language format. In some examples, the AI model is a first AI model, and the identity management circuitry 125 is to input the first descriptive data and the second descriptive data to a second AI model to determine whether the first object and the second object are the same object or the different objects.

In some examples, the identity management circuitry 125 identifies common physical characteristics associated with both the first object and the second object based on the first descriptive data and the second descriptive data. In some examples, the identity management circuitry 125 identifies first unique physical characteristics associated with the first object based on the first descriptive data and the second descriptive data. In some examples, the identity management circuitry 125 identifies second unique physical characteristics associated with the second object based on the first descriptive data and the second descriptive data. In some examples, the uniqueness measurement circuitry 105 includes the similarity scoring circuitry 130 to determine a score based on the common physical characteristics, the first unique physical characteristics, and the second unique physical characteristics. For example, the similarity scoring circuitry 130 may determine the score based on a ratio of an amount of the common physical characteristics to a total amount of the common physical characteristics, the first unique physical characteristics, and the second unique physical characteristics. In some examples, the identity management circuitry 125 determines whether the first object and the second object are the same object or the different objects based on the score.

In some examples, after the first object and the second object are identified as the same object, the identity management circuitry 125 associates a same object identifier (e.g., a physical object identifier) with the first object and the second object. In some examples, the uniqueness measurement circuitry 105 includes the identification cleanup circuitry 135 to retain the first camera sensor data based on one or more of the common physical characteristics, the first unique physical characteristics, and the second unique physical characteristics. In some such examples, the identification cleanup circuitry 135 further discards the second camera sensor data, and associates the first object and the second object with the first camera sensor data.

In some examples, the second camera sensor data is subsequent in time to the first camera sensor data, and after the first object and the second object are identified as the same object, the identity management circuitry 125 identifies a changed physical characteristic of the second object relative to the first object based on comparison of the first camera sensor data and the second camera sensor data. In some examples, the first camera sensor data is associated with a first location, the second sensor data is associated with a second location different than the first location, and the identity management circuitry 125 associates a cause of the changed physical characteristic with at least one of the second location or a third location between the first location and the second location.

In some examples, after the first object and the second object are identified as the same object, identity management circuitry 125 detects, based on at least one of the first camera sensor data or the second camera sensor data, that a physical object corresponding to the first object and the second object is missing an identification label, and causes an identification label to be generated for the physical object.

In some examples, the uniqueness measurement circuitry 105 includes the synthetic data generation circuitry 140 to generate synthetic data based on the first descriptive data and the second descriptive data, and train an AI model based on the synthetic data.

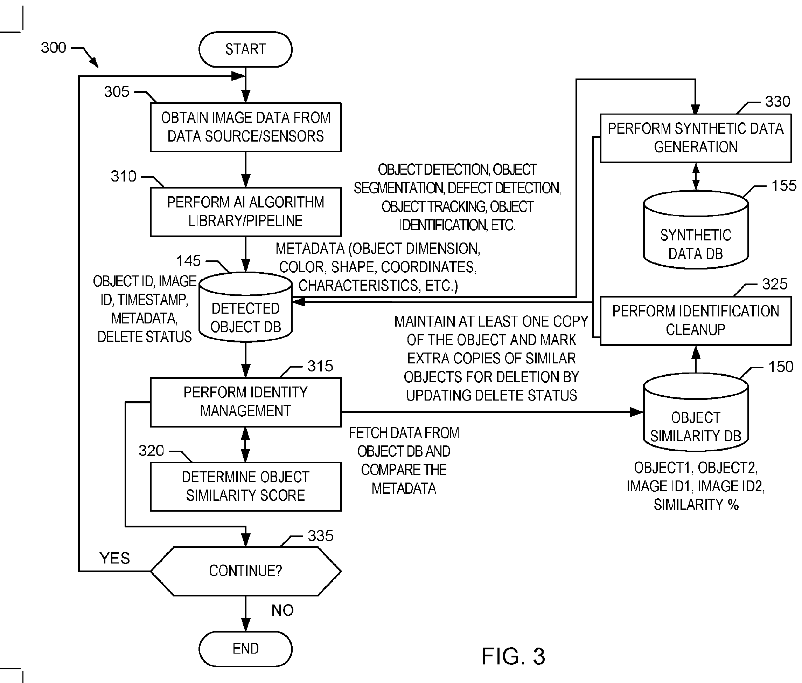

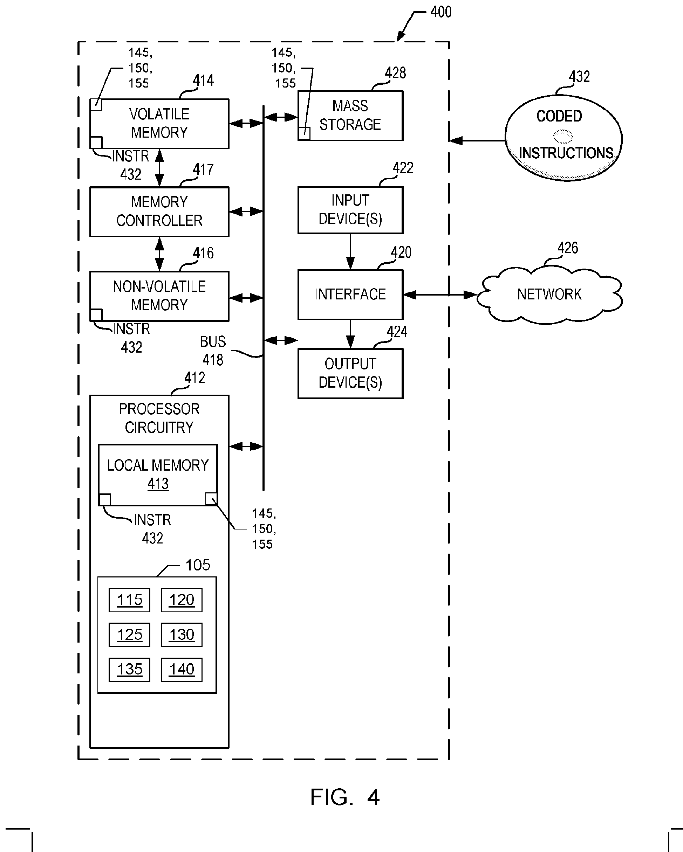

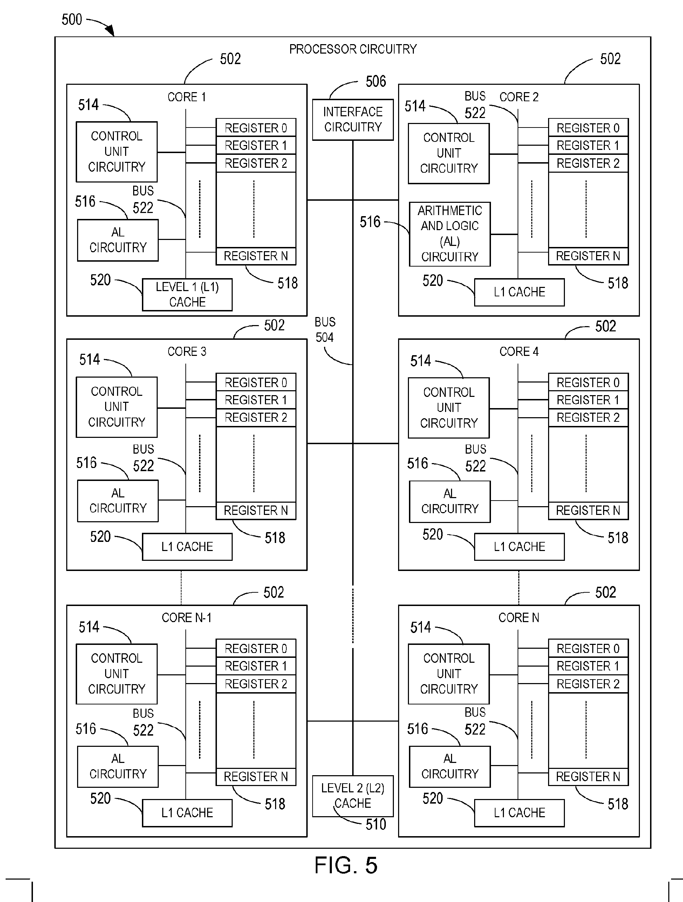

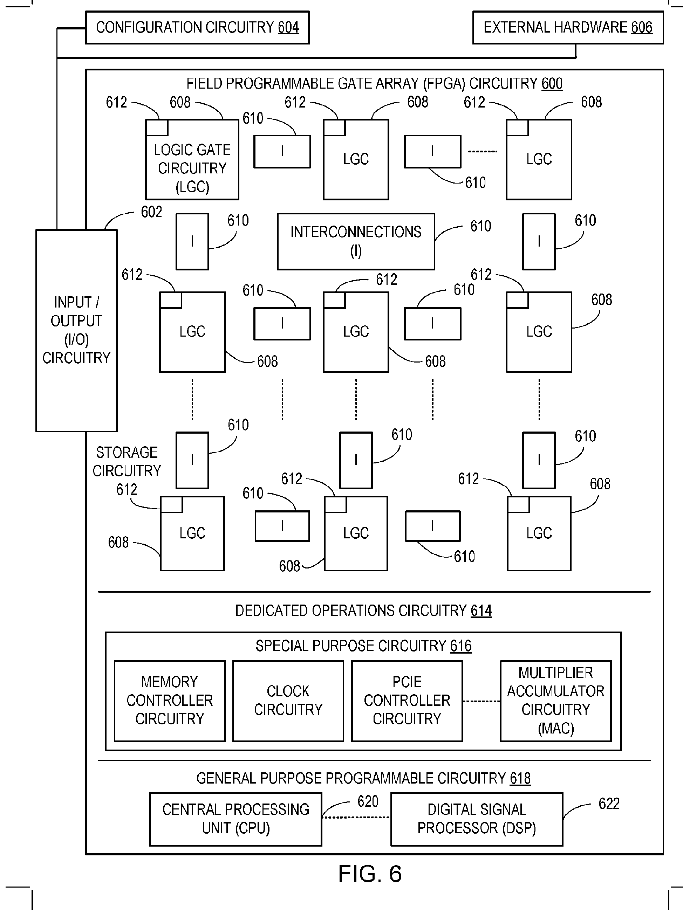

In some examples, the uniqueness measurement circuitry 105 includes means for accessing camera sensor data. For example, the means for accessing camera sensor data may be implemented by the sensor data access circuitry 115. In some examples, the sensor data access circuitry 115 may be instantiated by programmable circuitry such as the example programmable circuitry 412 of FIG. 4. For instance, the sensor data access circuitry 115 may be instantiated by the example microprocessor 500 of FIG. 5 executing machine executable instructions such as those implemented by at least block 305 of FIG. 3. In some examples, the sensor data access circuitry 115 may be instantiated by hardware logic circuitry, which may be implemented by an ASIC, XPU, or the FPGA circuitry 600 of FIG. 6 configured and/or structured to perform operations corresponding to the machine readable instructions. Additionally or alternatively, the sensor data access circuitry 115 may be instantiated by any other combination of hardware, software, and/or firmware. For example, the sensor data access circuitry 115 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the uniqueness measurement circuitry 105 includes means for detecting objects and generating descriptive data. For example, the means for detecting objects and generating descriptive data may be implemented by the object detection circuitry 120. In some examples, the object detection circuitry 120 may be instantiated by programmable circuitry such as the example programmable circuitry 412 of FIG. 4. For instance, the object detection circuitry 120 may be instantiated by the example microprocessor 500 of FIG. 5 executing machine executable instructions such as those implemented by at least block 310 of FIG. 3. In some examples, the object detection circuitry 120 may be instantiated by hardware logic circuitry, which may be implemented by an ASIC, XPU, or the FPGA circuitry 600 of FIG. 6 configured and/or structured to perform operations corresponding to the machine readable instructions. Additionally or alternatively, the object detection circuitry 120 may be instantiated by any other combination of hardware, software, and/or firmware. For example, the object detection circuitry 120 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the uniqueness measurement circuitry 105 includes means for identifying object similarity. For example, the means for identifying object similarity may be implemented by the identity management circuitry 125. In some examples, the identity management circuitry 125 may be instantiated by programmable circuitry such as the example programmable circuitry 412 of FIG. 4. For instance, the identity management circuitry 125 may be instantiated by the example microprocessor 500 of FIG. 5 executing machine executable instructions such as those implemented by at least block 315 of FIG. 3. In some examples, the identity management circuitry 125 may be instantiated by hardware logic circuitry, which may be implemented by an ASIC, XPU, or the FPGA circuitry 600 of FIG. 6 configured and/or structured to perform operations corresponding to the machine readable instructions. Additionally or alternatively, the identity management circuitry 125 may be instantiated by any other combination of hardware, software, and/or firmware. For example, the identity management circuitry 125 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the uniqueness measurement circuitry 105 includes means for calculating similarity scores. For example, the means for calculating similarity scores may be implemented by the similarity scoring circuitry 130. In some examples, the similarity scoring circuitry 130 may be instantiated by programmable circuitry such as the example programmable circuitry 412 of FIG. 4. For instance, the similarity scoring circuitry 130 may be instantiated by the example microprocessor 500 of FIG. 5 executing machine executable instructions such as those implemented by at least block 320 of FIG. 3. In some examples, the similarity scoring circuitry 130 may be instantiated by hardware logic circuitry, which may be implemented by an ASIC, XPU, or the FPGA circuitry 600 of FIG. 6 configured and/or structured to perform operations corresponding to the machine readable instructions. Additionally or alternatively, the similarity scoring circuitry 130 may be instantiated by any other combination of hardware, software, and/or firmware. For example, the similarity scoring circuitry 130 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the uniqueness measurement circuitry 105 includes means for performing data cleanup. For example, the means for performing data cleanup may be implemented by the identification cleanup circuitry 135. In some examples, the identification cleanup circuitry 135 may be instantiated by programmable circuitry such as the example programmable circuitry 412 of FIG. 4. For instance, the identification cleanup circuitry 135 may be instantiated by the example microprocessor 500 of FIG. 5 executing machine executable instructions such as those implemented by at least block 325 of FIG. 3. In some examples, the identification cleanup circuitry 135 may be instantiated by hardware logic circuitry, which may be implemented by an ASIC, XPU, or the FPGA circuitry 600 of FIG. 6 configured and/or structured to perform operations corresponding to the machine readable instructions. Additionally or alternatively, the identification cleanup circuitry 135 may be instantiated by any other combination of hardware, software, and/or firmware. For example, the identification cleanup circuitry 135 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the uniqueness measurement circuitry 105 includes means for generating synthetic data. For example, the means for generating synthetic data may be implemented by the synthetic data generation circuitry 140. In some examples, the synthetic data generation circuitry 140 may be instantiated by programmable circuitry such as the example programmable circuitry 412 of FIG. 4. For instance, the synthetic data generation circuitry 140 may be instantiated by the example microprocessor 500 of FIG. 5 executing machine executable instructions such as those implemented by at least block 330 of FIG. 3. In some examples, the synthetic data generation circuitry 140 may be instantiated by hardware logic circuitry, which may be implemented by an ASIC, XPU, or the FPGA circuitry 600 of FIG. 6 configured and/or structured to perform operations corresponding to the machine readable instructions. Additionally or alternatively, the synthetic data generation circuitry 140 may be instantiated by any other combination of hardware, software, and/or firmware. For example, the synthetic data generation circuitry 140 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

While an example manner of implementing the uniqueness measurement circuitry 105 is illustrated in FIGS. 1-2, one or more of the elements, processes, and/or devices illustrated in FIGS. 1-2 may be combined, divided, re-arranged, omitted, eliminated, and/or implemented in any other way. Further, the example sensor data access circuitry 115, the example object detection circuitry 120, the example identity management circuitry 125, the example similarity scoring circuitry 130, the example identification cleanup circuitry 135, the example synthetic data generation circuitry 140, the example detected object storage 145, the example object similarity storage 150, the example synthetic data storage 155, and/or, more generally, the example uniqueness measurement circuitry 105 may be implemented by hardware alone or by hardware in combination with software and/or firmware. Thus, for example, any of the example sensor data access circuitry 115, the example object detection circuitry 120, the example identity management circuitry 125, the example similarity scoring circuitry 130, the example identification cleanup circuitry 135, the example synthetic data generation circuitry 140, the example detected object storage 145, the example object similarity storage 150, the example synthetic data storage 155, and/or, more generally, the example uniqueness measurement circuitry 105 could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example uniqueness measurement circuitry 105 may include one or more elements, processes, and/or devices in addition to, or instead of, those illustrated in FIGS. 1-2, and/or may include more than one of any or all of the illustrated elements, processes and devices.

Flowchart(s) representative of example machine readable instructions, which may be executed by programmable circuitry to implement and/or instantiate the uniqueness measurement circuitry 105 of FIG. 1 and/or representative of example operations which may be performed by programmable circuitry to implement and/or instantiate the uniqueness measurement circuitry 105 of FIG. 1, are shown in FIG. 3. The machine readable instructions may be one or more executable programs or portion(s) of one or more executable programs for execution by programmable circuitry such as the programmable circuitry 412 shown in the example processor platform 400 discussed below in connection with FIG. 4 and/or may be one or more function(s) or portion(s) of functions to be performed by the example programmable circuitry (e.g., an FPGA) discussed below in connection with FIGS. 5 and/or 6. In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIG. 3, many other methods of implementing the example uniqueness measurement circuitry 105 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIG. 3 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

FIG. 3 is a flowchart representative of example machine readable instructions and/or example operations 300 that may be executed, instantiated, and/or performed by programmable circuitry to implement the uniqueness measurement circuitry 105. The example machine-readable instructions and/or the example operations 300 of FIG. 3 begin at block 305, at which the sensor data access circuitry 115 of the uniqueness measurement circuitry 105 accesses camera sensor data from the camera sensors 110, as described above. At block 310, the object detection circuitry 120 of the uniqueness measurement circuitry 105 processes the camera sensor data, as described above, to detect objects in the camera sensor data and to generate descriptive data of physical characteristics of the detected objects. At block 310, the object detection circuitry 120 also stores the generated descriptive data for the detected objects in the detected object storage 145, as described above.

At block 315, the identity management circuitry 125 of the uniqueness measurement circuitry 105 fetches descriptive data from the detected object storage 145 for pairs of detected objects to be identified and identifies the objects as a same object or different unique objects, as described above. For example, at block 320, the identity management circuitry 125 invokes the similarity scoring circuitry 130 included in the uniqueness measurement circuitry 105 to calculate a similarity score for the pair of detected objects, which is used by the identity management circuitry 125 to determine whether the pair of detected objects corresponds to the same object or different unique objects. At block 315, the identity management circuitry 125 also generates, based on the fetched descriptive data, physical object identifier(s) for the pair of detected objects and stores the information in the object similarity storage 150, as described above.

At block 325, the identification cleanup circuitry 135 of the uniqueness measurement circuitry 105 performs data cleanup operations, as described above, to reduce storage usage by the uniqueness measurement circuitry 105. At block 330, the synthetic data generation circuitry 140 of the uniqueness measurement circuitry 105 generates synthetic data based on descriptive data fetched from the detected object storage 145, as described above.

At block 335, the uniqueness measurement circuitry 105 determines whether processing is to continue. If processing is to continue, operation returns to block 305 and blocks subsequent thereto. Otherwise, the machine-readable instructions and/or the example operations 300 then end.

FIG. 4 is a block diagram of an example programmable circuitry platform 400 structured to execute and/or instantiate the example machine-readable instructions and/or the example operations of FIG. 3 to implement the uniqueness measurement circuitry 105 of FIG. 1. The programmable circuitry platform 400 can be, for example, a server, a personal computer, a workstation, a self-learning machine (e.g., a neural network), a mobile device (e.g., a cell phone, a smart phone, a tablet such as an iPad™), a personal digital assistant (PDA), an Internet appliance, a DVD player, a CD player, a digital video recorder, a Blu-ray player, a gaming console, a personal video recorder, a set top box, a headset (e.g., an augmented reality (AR) headset, a virtual reality (VR) headset, etc.) or other wearable device, or any other type of computing and/or electronic device.

The programmable circuitry platform 400 of the illustrated example includes programmable circuitry 412. The programmable circuitry 412 of the illustrated example is hardware. For example, the programmable circuitry 412 can be implemented by one or more integrated circuits, logic circuits, FPGAs, microprocessors, CPUs, GPUs, DSPs, and/or microcontrollers from any desired family or manufacturer. The programmable circuitry 412 may be implemented by one or more semiconductor based (e.g., silicon based) devices. In this example, the programmable circuitry 412 implements the example sensor data access circuitry 115, the example object detection circuitry 120, the example identity management circuitry 125, the example similarity scoring circuitry 130, the example identification cleanup circuitry 135 and/or the example synthetic data generation circuitry 140.

The programmable circuitry 412 of the illustrated example includes a local memory 413 (e.g., a cache, registers, etc.). The programmable circuitry 412 of the illustrated example is in communication with main memory 414, 416, which includes a volatile memory 414 and a non-volatile memory 416, by a bus 418. The volatile memory 414 may be implemented by Synchronous Dynamic Random Access Memory (SDRAM), Dynamic Random Access Memory (DRAM), RAMBUS® Dynamic Random Access Memory (RDRAM®), and/or any other type of RAM device. The non-volatile memory 416 may be implemented by flash memory and/or any other desired type of memory device. Access to the main memory 414, 416 of the illustrated example is controlled by a memory controller 417. In some examples, the memory controller 417 may be implemented by one or more integrated circuits, logic circuits, microcontrollers from any desired family or manufacturer, or any other type of circuitry to manage the flow of data going to and from the main memory 414, 416. In some examples, the local memory 413 and/or the volatile memory 414 implement one or more of the example detected object storage 145, the example object similarity storage 150, and/or the example synthetic data storage 155.

The programmable circuitry platform 400 of the illustrated example also includes interface circuitry 420. The interface circuitry 420 may be implemented by hardware in accordance with any type of interface standard, such as an Ethernet interface, a universal serial bus (USB) interface, a Bluetooth® interface, a near field communication (NFC) interface, a Peripheral Component Interconnect (PCI) interface, and/or a Peripheral Component Interconnect Express (PCIe) interface.

In the illustrated example, one or more input devices 422 are connected to the interface circuitry 420. The input device(s) 422 permit(s) a user (e.g., a human user, a machine user, etc.) to enter data and/or commands into the programmable circuitry 412. The input device(s) 422 can be implemented by, for example, an audio sensor, a microphone, a camera (still or video), a keyboard, a button, a mouse, a touchscreen, a trackpad, a trackball, an isopoint device, and/or a voice recognition system.

One or more output devices 424 are also connected to the interface circuitry 420 of the illustrated example. The output device(s) 424 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 420 of the illustrated example, thus, typically includes a graphics driver card, a graphics driver chip, and/or graphics processor circuitry such as a GPU.

The interface circuitry 420 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 426. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 400 of the illustrated example also includes one or more mass storage discs or devices 428 to store firmware, software, and/or data. Examples of such mass storage discs or devices 428 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs. In some examples, the mass storage discs or devices 428 implement one or more of the example detected object storage 145, the example object similarity storage 150, and/or the example synthetic data storage 155.

The machine readable instructions 432, which may be implemented by the machine readable instructions of FIG. 3, may be stored in the mass storage device 428, in the volatile memory 414, in the non-volatile memory 416, and/or on at least one non-transitory computer readable storage medium such as a CD or DVD which may be removable.

FIG. 5 is a block diagram of an example implementation of the programmable circuitry 412 of FIG. 4. In this example, the programmable circuitry 412 of FIG. 4 is implemented by a microprocessor 500. For example, the microprocessor 500 may be a general-purpose microprocessor (e.g., general-purpose microprocessor circuitry). The microprocessor 500 executes some or all of the machine-readable instructions of the flowcharts of FIG. 3 to effectively instantiate the circuitry of FIG. 2 as logic circuits to perform operations corresponding to those machine readable instructions. In some such examples, the circuitry of FIG. 1 is instantiated by the hardware circuits of the microprocessor 500 in combination with the machine-readable instructions. For example, the microprocessor 500 may be implemented by multi-core hardware circuitry such as a CPU, a DSP, a GPU, an XPU, etc. Although it may include any number of example cores 502 (e.g., 1 core), the microprocessor 500 of this example is a multi-core semiconductor device including N cores. The cores 502 of the microprocessor 500 may operate independently or may cooperate to execute machine readable instructions. For example, machine code corresponding to a firmware program, an embedded software program, or a software program may be executed by one of the cores 502 or may be executed by multiple ones of the cores 502 at the same or different times. In some examples, the machine code corresponding to the firmware program, the embedded software program, or the software program is split into threads and executed in parallel by two or more of the cores 502. The software program may correspond to a portion or all of the machine readable instructions and/or operations represented by the flowcharts of FIG. 3.

The cores 502 may communicate by a first example bus 504. In some examples, the first bus 504 may be implemented by a communication bus to effectuate communication associated with one(s) of the cores 502. For example, the first bus 504 may be implemented by at least one of an Inter-Integrated Circuit (I2C) bus, a Serial Peripheral Interface (SPI) bus, a PCI bus, or a PCIe bus. Additionally or alternatively, the first bus 504 may be implemented by any other type of computing or electrical bus. The cores 502 may obtain data, instructions, and/or signals from one or more external devices by example interface circuitry 506. The cores 502 may output data, instructions, and/or signals to the one or more external devices by the interface circuitry 506. Although the cores 502 of this example include example local memory 520 (e.g., Level 1 (L1) cache that may be split into an L1 data cache and an L1 instruction cache), the microprocessor 500 also includes example shared memory 510 that may be shared by the cores (e.g., Level 2 (L2 cache)) for high-speed access to data and/or instructions. Data and/or instructions may be transferred (e.g., shared) by writing to and/or reading from the shared memory 510. The local memory 520 of each of the cores 502 and the shared memory 510 may be part of a hierarchy of storage devices including multiple levels of cache memory and the main memory (e.g., the main memory 414, 416 of FIG. 4). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 502 may be referred to as a CPU, DSP, GPU, etc., or any other type of hardware circuitry. Each core 502 includes control unit circuitry 514, arithmetic and logic (AL) circuitry (sometimes referred to as an ALU) 516, a plurality of registers 518, the local memory 520, and a second example bus 522. Other structures may be present. For example, each core 502 may include vector unit circuitry, single instruction multiple data (SIMD) unit circuitry, load/store unit (LSU) circuitry, branch/jump unit circuitry, floating-point unit (FPU) circuitry, etc. The control unit circuitry 514 includes semiconductor-based circuits structured to control (e.g., coordinate) data movement within the corresponding core 502. The AL circuitry 516 includes semiconductor-based circuits structured to perform one or more mathematic and/or logic operations on the data within the corresponding core 502. The AL circuitry 516 of some examples performs integer based operations. In other examples, the AL circuitry 516 also performs floating-point operations. In yet other examples, the AL circuitry 516 may include first AL circuitry that performs integer-based operations and second AL circuitry that performs floating-point operations. In some examples, the AL circuitry 516 may be referred to as an Arithmetic Logic Unit (ALU).

The registers 518 are semiconductor-based structures to store data and/or instructions such as results of one or more of the operations performed by the AL circuitry 516 of the corresponding core 502. For example, the registers 518 may include vector register(s), SIMD register(s), general-purpose register(s), flag register(s), segment register(s), machine-specific register(s), instruction pointer register(s), control register(s), debug register(s), memory management register(s), machine check register(s), etc. The registers 518 may be arranged in a bank as shown in FIG. 5. Alternatively, the registers 518 may be organized in any other arrangement, format, or structure, such as by being distributed throughout the core 502 to shorten access time. The second bus 522 may be implemented by at least one of an I2C bus, a SPI bus, a PCI bus, or a PCIe bus.

Each core 502 and/or, more generally, the microprocessor 500 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 500 is a semiconductor device fabricated to include many transistors interconnected to implement the structures described above in one or more integrated circuits (ICs) contained in one or more packages.

The microprocessor 500 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 500, in the same chip package as the microprocessor 500 and/or in one or more separate packages from the microprocessor 500.

FIG. 6 is a block diagram of another example implementation of the programmable circuitry 412 of FIG. 4. In this example, the programmable circuitry 412 is implemented by FPGA circuitry 600. For example, the FPGA circuitry 600 may be implemented by an FPGA. The FPGA circuitry 600 can be used, for example, to perform operations that could otherwise be performed by the example microprocessor 500 of FIG. 5 executing corresponding machine readable instructions. However, once configured, the FPGA circuitry 600 instantiates the operations and/or functions corresponding to the machine readable instructions in hardware and, thus, can often execute the operations/functions faster than they could be performed by a general-purpose microprocessor executing the corresponding software.

More specifically, in contrast to the microprocessor 500 of FIG. 5 described above (which is a general purpose device that may be programmed to execute some or all of the machine readable instructions represented by the flowchart(s) of FIG. 3 but whose interconnections and logic circuitry are fixed once fabricated), the FPGA circuitry 600 of the example of FIG. 6 includes interconnections and logic circuitry that may be configured, structured, programmed, and/or interconnected in different ways after fabrication to instantiate, for example, some or all of the operations/functions corresponding to the machine readable instructions represented by the flowchart(s) of FIG. 3. In particular, the FPGA circuitry 600 may be thought of as an array of logic gates, interconnections, and switches. The switches can be programmed to change how the logic gates are interconnected by the interconnections, effectively forming one or more dedicated logic circuits (unless and until the FPGA circuitry 600 is reprogrammed). The configured logic circuits enable the logic gates to cooperate in different ways to perform different operations on data received by input circuitry. Those operations may correspond to some or all of the instructions (e.g., the software and/or firmware) represented by the flowchart(s) of FIG. 3. As such, the FPGA circuitry 600 may be configured and/or structured to effectively instantiate some or all of the operations/functions corresponding to the machine readable instructions of the flowchart(s) of FIG. 3 as dedicated logic circuits to perform the operations/functions corresponding to those software instructions in a dedicated manner analogous to an ASIC. Therefore, the FPGA circuitry 600 may perform the operations/functions corresponding to the some or all of the machine readable instructions of FIG. 3 faster than the general-purpose microprocessor can execute the same.

In the example of FIG. 6, the FPGA circuitry 600 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 600 of FIG. 6 may access and/or load the binary file to cause the FPGA circuitry 600 of FIG. 6 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 600 of FIG. 6 to cause configuration and/or structuring of the FPGA circuitry 600 of FIG. 6, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 600 of FIG. 6 may access and/or load the binary file to cause the FPGA circuitry 600 of FIG. 6 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 600 of FIG. 6 to cause configuration and/or structuring of the FPGA circuitry 600 of FIG. 6, or portion(s) thereof.

The FPGA circuitry 600 of FIG. 6, includes example input/output (I/O) circuitry 602 to obtain and/or output data to/from example configuration circuitry 604 and/or external hardware 606. For example, the configuration circuitry 604 may be implemented by interface circuitry that may obtain a binary file, which may be implemented by a bit stream, data, and/or machine-readable instructions, to configure the FPGA circuitry 600, or portion(s) thereof. In some such examples, the configuration circuitry 604 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 606 may be implemented by external hardware circuitry. For example, the external hardware 606 may be implemented by the microprocessor 500 of FIG. 5.

The FPGA circuitry 600 also includes an array of example logic gate circuitry 608, a plurality of example configurable interconnections 610, and example storage circuitry 612. The logic gate circuitry 608 and the configurable interconnections 610 are configurable to instantiate one or more operations/functions that may correspond to at least some of the machine readable instructions of FIG. 3 and/or other desired operations. The logic gate circuitry 608 shown in FIG. 6 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 608 to enable configuration of the electrical structures and/or the logic gates to form circuits to perform desired operations/functions. The logic gate circuitry 608 may include other electrical structures such as look-up tables (LUTs), registers (e.g., flip-flops or latches), multiplexers, etc.

The configurable interconnections 610 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 608 to program desired logic circuits.

The storage circuitry 612 of the illustrated example is structured to store result(s) of the one or more of the operations performed by corresponding logic gates. The storage circuitry 612 may be implemented by registers or the like. In the illustrated example, the storage circuitry 612 is distributed amongst the logic gate circuitry 608 to facilitate access and increase execution speed.

The example FPGA circuitry 600 of FIG. 6 also includes example dedicated operations circuitry 614. In this example, the dedicated operations circuitry 614 includes special purpose circuitry 616 that may be invoked to implement commonly used functions to avoid the need to program those functions in the field. Examples of such special purpose circuitry 616 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 600 may also include example general purpose programmable circuitry 618 such as an example CPU 620 and/or an example DSP 622. Other general purpose programmable circuitry 618 may additionally or alternatively be present such as a GPU, an XPU, etc., that can be programmed to perform other operations.

Although FIGS. 5 and 6 illustrate two example implementations of the programmable circuitry 412 of FIG. 4, many other approaches are contemplated. For example, FPGA circuitry may include an on-board CPU, such as one or more of the example CPU 620 of FIG. 5. Therefore, the programmable circuitry 412 of FIG. 4 may additionally be implemented by combining at least the example microprocessor 500 of FIG. 5 and the example FPGA circuitry 600 of FIG. 6. In some such hybrid examples, one or more cores 502 of FIG. 5 may execute a first portion of the machine readable instructions represented by the flowchart(s) of FIG. 3 to perform first operation(s)/function(s), the FPGA circuitry 600 of FIG. 6 may be configured and/or structured to perform second operation(s)/function(s) corresponding to a second portion of the machine readable instructions represented by the flowcharts of FIG. 3, and/or an ASIC may be configured and/or structured to perform third operation(s)/function(s) corresponding to a third portion of the machine readable instructions represented by the flowcharts of FIG. 3.

It should be understood that some or all of the circuitry of FIG. 1 may, thus, be instantiated at the same or different times. For example, same and/or different portion(s) of the microprocessor 500 of FIG. 5 may be programmed to execute portion(s) of machine-readable instructions at the same and/or different times. In some examples, same and/or different portion(s) of the FPGA circuitry 600 of FIG. 6 may be configured and/or structured to perform operations/functions corresponding to portion(s) of machine-readable instructions at the same and/or different times.

In some examples, some or all of the circuitry of FIG. 1 may be instantiated, for example, in one or more threads executing concurrently and/or in series. For example, the microprocessor 500 of FIG. 5 may execute machine readable instructions in one or more threads executing concurrently and/or in series. In some examples, the FPGA circuitry 600 of FIG. 6 may be configured and/or structured to carry out operations/functions concurrently and/or in series. Moreover, in some examples, some or all of the circuitry of FIG. 1 may be implemented within one or more virtual machines and/or containers executing on the microprocessor 500 of FIG. 5.

In some examples, the programmable circuitry 412 of FIG. 4 may be in one or more packages. For example, the microprocessor 500 of FIG. 5 and/or the FPGA circuitry 600 of FIG. 6 may be in one or more packages. In some examples, an XPU may be implemented by the programmable circuitry 412 of FIG. 4, which may be in one or more packages. For example, the XPU may include a CPU (e.g., the microprocessor 500 of FIG. 5, the CPU 620 of FIG. 6, etc.) in one package, a DSP (e.g., the DSP 622 of FIG. 6) in another package, a GPU in yet another package, and an FPGA (e.g., the FPGA circuitry 600 of FIG. 6) in still yet another package.

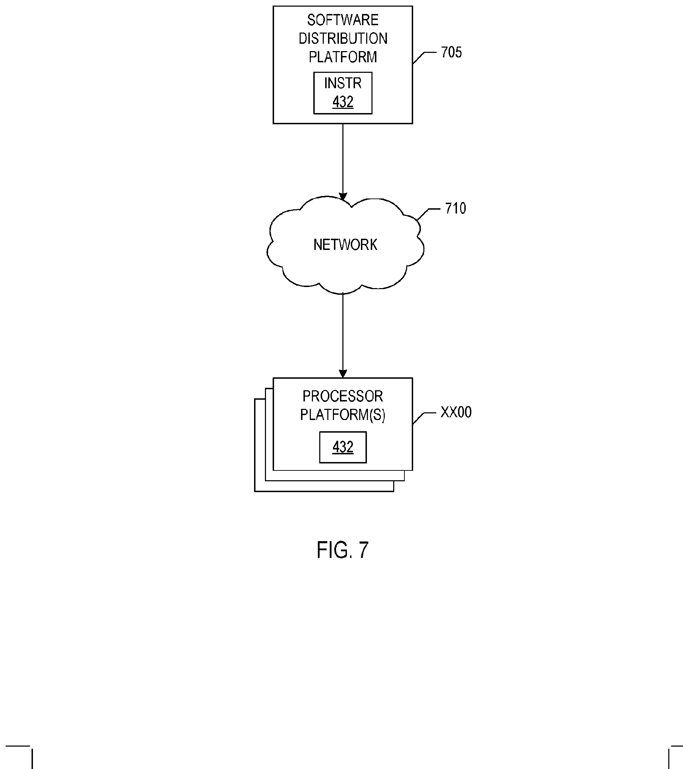

A block diagram illustrating an example software distribution platform 705 to distribute software such as the example machine readable instructions 432 of FIG. 4 to other hardware devices (e.g., hardware devices owned and/or operated by third parties from the owner and/or operator of the software distribution platform) is illustrated in FIG. 7. The example software distribution platform 705 may be implemented by any computer server, data facility, cloud service, etc., capable of storing and transmitting software to other computing devices. The third parties may be customers of the entity owning and/or operating the software distribution platform 705. For example, the entity that owns and/or operates the software distribution platform 705 may be a developer, a seller, and/or a licensor of software such as the example machine readable instructions 432 of FIG. 4. The third parties may be consumers, users, retailers, OEMs, etc., who purchase and/or license the software for use and/or re-sale and/or sub-licensing. In the illustrated example, the software distribution platform 705 includes one or more servers and one or more storage devices. The storage devices store the machine readable instructions 432, which may correspond to the example machine readable instructions of FIG. 3, as described above. The one or more servers of the example software distribution platform 705 are in communication with an example network 710, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 432 from the software distribution platform 705. For example, the software, which may correspond to the example machine readable instructions of FIG. 3, may be downloaded to the example programmable circuitry platform 400, which is to execute the machine readable instructions 432 to implement the uniqueness measurement circuitry 105. In some examples, one or more servers of the software distribution platform 705 periodically offer, transmit, and/or force updates to the software (e.g., the example machine readable instructions 432 of FIG. 4) to ensure improvements, patches, updates, etc., are distributed and applied to the software at the end user devices. Although referred to as software above, the distributed "software" could alternatively be firmware.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified herein.

As used herein "substantially real time" refers to occurrence in a near instantaneous manner recognizing there may be real world delays for computing time, transmission, etc. Thus, unless otherwise specified, "substantially real time" refers to real time + 1 second.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example an integrated circuit may be implemented as one or more of an ASIC, an FPGA, a chip, a microchip, programmable circuitry, a semiconductor substrate coupling multiple circuit elements, a system on chip (SoC), etc.

From the foregoing, it will be appreciated that example systems, apparatus, articles of manufacture, and methods have been disclosed that perform object uniqueness measurement based on camera sensor data to identify objects based on their physical characteristics depicted in the camera sensor data. Object uniqueness measurement techniques disclosed herein are able to identify unique objects in an environment without reliance on identification information attached to the objects or imprinted on the objects. Accordingly, object uniqueness measurement techniques disclosed herein are more robust and reliable than techniques that rely on barcodes, QR codes, RFID tags, etc., which can become detached from the objects or otherwise damaged over the lifetime of the objects. Disclosed systems, apparatus, articles of manufacture, and methods are accordingly directed to one or more improvement(s) in the operation of a machine such as a computer or other electronic and/or mechanical device.

Further examples and combinations thereof include the following. Example 1 includes an apparatus comprising interface circuitry, computer readable instructions, and at least one processor circuit to be programmed by the computer readable instructions to generate first descriptive data of a first physical characteristic of a first object based on first camera sensor data from a first camera sensor, generate second descriptive data of a second physical characteristic of a second object based on second camera sensor data from a second camera sensor different from the first camera sensor, identify, based on the first descriptive data and the second descriptive data, common physical characteristics associated with both the first object and the second object, first unique physical characteristics associated with the first object, and second unique physical characteristics associated with the second object, and identify the first object and the second object as one of a same object or different objects based on the common physical characteristics, the first unique physical characteristics, and the second unique physical characteristics.

Example 2 includes the apparatus of example 1, wherein one or more of the at least one processor circuit is to input the first camera sensor data to an artificial intelligence (AI) model to generate the first descriptive data, and input the second camera sensor data to the AI model to generate the second descriptive data, at least one of the first descriptive data or the second descriptive data in a natural language format.

Example 3 includes the apparatus of example 1 or example 2, wherein the AI model is a first AI model, and one or more of the at least one processor circuit is to input the first descriptive data and the second descriptive data to a second AI model to determine whether the first object and the second object are the same object or the different objects.

Example 4 includes the apparatus of any one of examples 1 to 3, wherein one or more of the at least one processor circuit is to determine a score based on the common physical characteristics, the first unique physical characteristics, and the second unique physical characteristics, and determine whether the first object and the second object are the same object or the different objects based on the score.

Example 5 includes the apparatus of any one of examples 1 to 4, wherein one or more of the at least one processor circuit is to determine the score based on a ratio of an amount of the common physical characteristics to a total amount of the common physical characteristics, the first unique physical characteristics, and the second unique physical characteristics.

Example 6 includes the apparatus of any one of examples 1 to 5, wherein, after the first object and the second object are identified as the same object, one or more of the at least one processor circuit is to associate a same object identifier with the first object and the second object, retain the first camera sensor data based on the common physical characteristics, the first unique physical characteristics, and the second unique physical characteristics, discard the second camera sensor data, and associate the first object and the second object with the first camera sensor data.

Example 7 includes the apparatus of any one of examples 1 to 6, wherein the second camera sensor data is subsequent in time to the first camera sensor data, and after the first object and the second object are identified as the same object, one or more of the at least one processor circuit is to identify a changed physical characteristic of the second object relative to the first object based on comparison of the first camera sensor data and the second camera sensor data.

Example 8 includes the apparatus of any one of examples 1 to 7, wherein the first camera sensor data is associated with a first location, the second camera sensor data is associated with a second location different than the first location, and one or more of the at least one processor circuit is to associate a cause of the changed physical characteristic with at least one of the second location or a third location between the first location and the second location.

Example 9 includes the apparatus of any one of examples 1 to 7, wherein, after the first object and the second object are identified as the same object, one or more of the at least one processor circuit is to detect, based on at least one of the first camera sensor data or the second camera sensor data, that an identification label associated with a physical object corresponding to the first object and the second object is at least one of missing or damaged, and cause a replacement identification label to be generated for the physical object, the replacement identification label to reassign an identity to the physical object.

Example 10 includes the apparatus of any one of examples 1 to 9, wherein one or more of the at least one processor circuit is to generate at least one of the first descriptive data or the second descriptive data based on at least one of time information or location information associated with the first camera sensor data and the second camera sensor data.

Example 11 includes the apparatus of any one of examples 1 to 10, wherein one or more of the at least one processor circuit is to generate synthetic data based on the first descriptive data and the second descriptive data, and train an AI model based on the synthetic data.

Example 12 includes the apparatus of any one of examples 1 to 11, wherein the first camera sensor data includes at least one of a first image or a first video, and the second camera sensor data includes at least one of a second image or a second video.

Example 13 includes the apparatus of any one of examples 1 to 12, wherein the first descriptive data and the second descriptive data are not pixel-based data.

Example 14 includes at least one non-transitory computer readable medium comprising computer instructions to cause at least one processor circuit to at least generate first descriptive data of a first physical characteristic of a first object based on first camera sensor data associated with a first location, generate second descriptive data of a second physical characteristic of a second object based on second camera sensor data associated with a second location different from the first location, identifying, based on the first descriptive data and the second descriptive data, common physical characteristics associated with both the first object and the second object, first unique physical characteristics associated with the first object, and second unique physical characteristics associated with the second object, and identify the first object and the second object as one of a same object or different objects based on the common physical characteristics, the first unique physical characteristics, and the second unique physical characteristics.

Example 15 includes the at least one non-transitory computer readable medium of example 14, wherein the instructions are to cause one or more of the at least one processor circuit to process the first camera sensor data with an artificial intelligence (AI) model to generate the first descriptive data in a natural language format, and process the second camera sensor data with the AI model to generate the second descriptive data in the natural language format.

Example 16 includes the at least one non-transitory computer readable medium of example 14 or example 15, wherein the instructions are to cause one or more of the at least one processor circuit to determine a score based on the common physical characteristics, the first unique physical characteristics, and the second unique physical characteristics, and determine whether the first object and the second object are the same object or the different objects based on the score.

Example 17 includes the at least one non-transitory computer readable medium of any one of examples 14 to 16, wherein the second camera sensor data is subsequent in time to the first camera sensor data, and after the first object and the second object are identified as the same object, the instructions are to cause one or more of the at least one processor circuit to identify a changed physical characteristic of the second object relative to the first object based on comparison of the first camera sensor data and the second camera sensor data, and associate a cause of the changed physical characteristic with at least one of the second location or a third location between the first location and the second location.

Example 18 includes a method comprising generating, by at least one processor circuit programmed by at least one instruction, first descriptive data of a first physical characteristic of a first object based on first camera sensor data associated with a first field of view, generating, by one of more of the at least one processor circuit, second descriptive data of a second physical characteristic of a second object based on second camera sensor data associated with a second field of view different from the first field of view, determining, by one of more of the at least one processor circuit, common physical characteristics associated with both the first object and the second object, first unique physical characteristics associated with the first object, and second unique physical characteristics associated with the second object, the common physical characteristics, the first unique physical characteristics and the second unique physical characteristics identified based on the first descriptive data and the second descriptive data, and identifying, by one or more of the at least one processor circuit, the first object and the second object as one of a same object or different objects based on the common physical characteristics, the first unique physical characteristics, and the second unique physical characteristics.

Example 19 includes the method of example 18, wherein the identifying includes determining a score based on the common physical characteristics, the first unique physical characteristics, and the second unique physical characteristics, and determining whether the first object and the second object are the same object or the different objects based on the score.

Example 20 includes the method of example 18 or example 19, further including, after identifying the first object and the second object are the same object detecting, based on at least one of the first camera sensor data or the second camera sensor data, that an identification label associated with a physical object corresponding to the first object and the second object is at least one of missing or damaged, and generating a replacement identification label for the physical object, the replacement identification label to reassign an identity to the physical object.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

**Claims**

1. A method comprising:

   generating first descriptive data of a first physical characteristic of a first object based on first camera sensor data from a first camera sensor;
   generating second descriptive data of a second physical characteristic of a second object based on second camera sensor data from a second camera sensor different from the first camera sensor;
   identifying, based on the first descriptive data and the second descriptive data, common physical characteristics associated with both the first object and the second object, first unique physical characteristics associated with the first object, and second unique physical characteristics associated with the second object; and
   identifying the first object and the second object as one of a same object or different objects based on the common physical characteristics, the first unique physical characteristics, and the second unique physical characteristics.

2. The method of claim 1, including:

   inputting the first camera sensor data to an artificial intelligence (AI) model to generate the first descriptive data; and
   inputting the second camera sensor data to the AI model to generate the second descriptive data, at least one of the first descriptive data or the second descriptive data in a natural language format.

3. The method of claim 2, wherein the AI model is a first AI model, and including inputting the first descriptive data and the second descriptive data to a second AI model to determine whether the first object and the second object are the same object or the different objects.

4. The method of any one of claims 1 to 3, including:

   determining a score based on the common physical characteristics, the first unique physical characteristics, and the second unique physical characteristics; and
   determining whether the first object and the second object are the same object or the different objects based on the score.

5. The method of claim 4, wherein the score is based on a ratio of an amount of the common physical characteristics to a total amount of the common physical characteristics, the first unique physical characteristics, and the second unique physical characteristics.

6. The method of any one of claims 1 to 5, including, after the first object and the second object are identified as the same object:

   associating a same object identifier with the first object and the second object;
   retaining the first camera sensor data based on the common physical characteristics, the first unique physical characteristics, and the second unique physical characteristics;
   discarding the second camera sensor data; and
   associating the first object and the second object with the first camera sensor data.

7. The method of any one of claims 1 to 5, wherein the second camera sensor data is subsequent in time to the first camera sensor data, and including, after the first object and the second object are identified as the same object, identifying a changed physical characteristic of the second object relative to the first object based on comparison of the first camera sensor data and the second camera sensor data.

8. The method of claim 7, wherein the first camera sensor data is associated with a first location, the second camera sensor data is associated with a second location different than the first location, and including associating a cause of the changed physical characteristic with at least one of the second location or a third location between the first location and the second location.

9. The method of claim 1, including, after the first object and the second object are identified as the same object:

   detecting, based on at least one of the first camera sensor data or the second camera sensor data, that an identification label associated with a physical object corresponding to the first object and the second object is at least one of missing or damaged; and
   generating a replacement identification label for the physical object, the replacement identification label to reassign an identity to the physical object.

10. The method of claim **1,** including generating at least one of the first descriptive data or the second descriptive data based on at least one of time information or location information associated with the first camera sensor data and the second camera sensor data.

11. The method of claim 1, including:

   generating synthetic data based on the first descriptive data and the second descriptive data; and
   training an AI model based on the synthetic data.

12. The method of claim **1,** wherein the first camera sensor data includes at least one of a first image or a first video, and the second camera sensor data includes at least one of a second image or a second video.

13. The method of claim **1,** wherein the first descriptive data and the second descriptive data are not pixel-based data.

14. At least one non-transitory computer readable medium comprising computer instructions to cause at least one processor circuit to perform the method of any one of claims 1 to 13.

15. An apparatus comprising at least one processor circuit to perform the method of any one of claims 1 to 14.

FIG. 1

200

205

210

O1 = [METADATA1 (M1)]
O1 = M11 + M12 + M13 + ...

O2 = [METADATA2 (M2)]
O2 = M21 + M22 + M23 + ...

125

IDENTITY MANAGEMENT
CIRCUITRY

215

$(O_{COMMON} = O1 \cap O2), O1_{UNIQUE}, O2_{UNIQUE}$

220

$(O1 = O_{COMMON} + O1_{UNIQUE})$

225

$(O1 = O_{COMMON} + O2_{UNIQUE})$

FIG. 2

FIG. 3

EP 4 668 236 A1

FIG. 4

FIG. 5

FIG. 6

SOFTWARE
DISTRIBUTION
PLATFORM — 705

INSTR
432

— 710

NETWORK

PROCESSOR
PLATFORM(S) — XX00

432

FIG. 7

# EUROPEAN SEARCH REPORT

**Application Number**

EP 25 17 4213

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUTIAN LIN ET AL: "Improving Person Re-identification by Attribute and Identity Learning", ARXIV.ORG, CORNELL UNIVERSITY LIBRARY, 201 OLIN LIBRARY CORNELL UNIVERSITY ITHACA, NY 14853, 21 March 2017 (2017-03-21), XP081323895, DOI: 10.1016/J.PATCOG.2019.06.006 | 1-8, 10-15 | INV. G06V20/80 G06V20/52 |
| Y | * Title * * figure 5 * * page 155, left-hand column, paragraph 3rd * * 4.3 Attribute acceleration process; page 156 * * 5.1 Datasets and evaluation protocol; page 156 * ----- | 9 | |
| Y | RUTINOWSKI JEROME ET AL: "Deep Learning Based Re-Identification of Wooden Euro-pallets", 2022 21ST IEEE INTERNATIONAL CONFERENCE ON MACHINE LEARNING AND APPLICATIONS (ICMLA), IEEE, 12 December 2022 (2022-12-12), pages 113-117, XP034314186, DOI: 10.1109/ICMLA55696.2022.00023 [retrieved on 2023-03-23] * I. Introduction; page 113 * ----- | 9 | **TECHNICAL FIELDS SEARCHED (IPC)** G06V |
| A | US 2021/125346 A1 (MIRZA SHAHMEER ALI [US] ET AL) 29 April 2021 (2021-04-29) * the whole document * ----- | 1-15 | |

The present search report has been drawn up for all claims

| Place of search | Date of completion of the search | Examiner |
|---|---|---|
| The Hague | 21 July 2025 | Meier, Ueli |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 668 236 A1**

## ANNEX TO THE EUROPEAN SEARCH REPORT
## ON EUROPEAN PATENT APPLICATION NO.

EP 25 17 4213

21-07-2025

| Patent document cited in search report | Publication date | Patent family member(s) | Publication date |
|---|---|---|---|
| US 2021125346 A1 | 29-04-2021 | US 2021125346 A1<br>US 2021272296 A1 | 29-04-2021<br>02-09-2021 |

30